# EUROPÄISCHE PATENTSCHRIFT

(11) **EP 1 158 851 B1**
(45) Veröffentlichungstag und Bekanntmachung des Hinweises auf die Patenterteilung: **26.03.2003**
(21) Anmeldenummer: 00922491.6
(22) Anmeldetag: 02.03.2000
(51) Int. Cl.: A01K 1/015

(54) **TIERSTREU**
ANIMAL LITTER
LITIERE

(30) Priorität: 11.03.1999 DE 19910897
(43) Veröffentlichungstag der Anmeldung: 05.12.2001
(73) Patentinhaber: SÜD-CHEMIE AG, 80333 München (DE)
(72) Erfinder: SIMMLER-HÜBENTHAL, Hubert, D-85368 Moosburg (DE); HAUBENSAK, Otto, D-83098 Brannenburg (DE)
(74) Vertreter: Westendorp, Michael Oliver, Dr.
(86) Internationale Anmeldenummer: EP0001804
(87) Internationale Veröffentlichungsnummer: WO00053001

(56) Entgegenhaltungen:
- EP-A- 0 572 702
- GB-A- 1 060 447
- GB-A- 2 291 774

## Beschreibung

Die Erfindung betrifft eine Tierstreu, insbesondere eine Katzenstreu, auf der Basis von anorganischen Sorbentien und deren Gemischen.

Es werden bereits Tierstreuen angeboten, welche Geruchs- oder hygieneverbessernde Zusätze enthalten. Hierbei handelt es sich um kostengünstige, synthetische Standardpräparate mit bakteriziden oder bakteriostatischen Wirkungen, die auch in Desinfektionslösungen Verwendung finden. Meist sind dies halogenierte organische Verbindungen, welche oft ein hohes Potential an Toxizität und/oder Umweltschädlichkeit aufweisen.

Die US-A-4,494,582 beschreibt ein festes Adsorbens, welches mit einem bakteriostatisch wirksamen halogenierten aromatischen Kohlenwasserstoff imprägniert ist. In der US-A-4,341,180 wird die Verwendung von Cetylpyridiniumchlorid oder Cetalkoniumchlorid als bakterizide Wirkstoffe beschrieben. Die US-A-4,622,920 beschreibt ebenso wie die EP-A-201 209 ein anorganisches Adsorbens, welches Paraben (p-Hydroxybenzoat) bzw. alternative Benzoesäureester enthält. Ferner beschreibt die US-A-5,109,805 die Verwendung von Bronopol (2-Brom-2-nitro-1,3-propandiol).

Das DE 296 00 587 U1 beschreibt eine organische Tierstreu, welche mit einem Extrakt aus Malaleuceen (Teebaumöl) besprüht wird. Derartige Zusätze haben sich wegen ihrer geringen bakteriostatischen Wirksamkeit und aus Kostengründen bislang nicht durchsetzen können.

Weiterhin wurden Tierstreuen Duftstoffe zugesetzt, welche die bei ihrer Verwendung entstehenden unangenehmen Gerüche überdecken sollen. So beschreibt die GB-A-2,291,774 eine Mischung aus Bentonit und Perlir, welche mit Duftstoffen und/oder nicht näher spezifizierten antimikrobiellen Zusätzen versetzt werden kann. Die Akzeptanz solcher Produkte bei Mensch und Tier ist fraglich, der Hygieneaspekt bleibt gänzlich unberührt.

Aufgabe der vorliegenden Erfindung ist die Bereitstellung einer Tierstreu mit verbessertem Hygienestatus, wobei der Anspruch der Natürlichkeit der Streu erhalten bleiben soll. Die Besiedelung der Streu mit Bakterien und Pilzen soll reduziert werden, um die Entstehung von Gerüchen zu reduzieren, allergisch bedingte Reaktionen der Verbraucher, z.B. durch Pilzsporen, sollen vermieden werden und die Ergiebigkeit der Streu soll durch verlängerte Nutzungsdauer erhöht werden.

Gegenstand der Erfindung ist somit eine Tierstreu, insbesondere Katzenstreu, auf der Basis von anorganischen Sorbentien und deren Gemischen gemäß Anspruch 1.

Bei den anorganischen Sorbentien handelt es sich vorzugsweise um silicatische Sorbentien, wie Calciumsilicat, Tonmineralien, wie Bentonit, Hectorit, Glauconit, Sauconit oder Illit; Palygorskit (Attapulgit) oder Sepiolith. Weitere geeignete anorganische Sorbentien sind Zeolithe, synthetische Silicate und Polykieselsäuren.

Die erfindungsgemäße Tierstreu kann zusätzlich zu den anorganischen Sorbentien auch organische Sorbentien, wie Holzmehl, Papierfasern oder Cellulosefasern, enthalten, wodurch das spezifische Gewicht erniedrigt wird. Beispiele für derartige Tierstreuen mit anorganischen und organischen Sorbentien sind in den DE-A-4 311 488, 4 327 159, 4 338 362, 19 653 152 und der EP-A-0 663 793 beschrieben.

Thymol, ist der Hauptbestandteil von Extrakten aus Thymian (Thymus spec.), Majoran, Oreganum und Ajowan-Samen, kann jedoch auch in reiner Form synthetisch hergestellt werden. Über eine Verwendung des Thymols zur biostatischen bzw. bioziden Ausrüstung von anorganischen Sorbentien ist bisher noch nichts bekannt geworden.

Die erfindungsgemäße Tierstreu enthält vorzugsweise zusätzlich eine feste Peroxo-verbindung, insbesondere Magnesium- und/oder Calciumperoxid. Daneben können auch die entsprechenden Alkaliperoxide sowie die Alkali- oder Erdalkaliperoxoborate, -Peroxocarbonate, -Peroxosulfate, -Peroxodisulfate und -Peroxophosphate verwendet werden.

Die biozide bzw. biostatische Wirkung der Peroxoverbindungen beruht wahrscheinlich darauf, daß bei Kontakt mit Flüssigkeiten H₂O₂ entsteht, welches katalytisch entweder in ein H*- und ein HOO*-Radikal oder in zwei Hydroxylradikale (OH*) gespalten wird (homolytische Spaltung). Außerdem können Sauerstoffradikale gebildet werden. Diese Radikale sind die eigentlichen bioziden Wirkstoffe. Die anorganischen Sorbentien wirken hierbei als Katalysatoren. Ohne den Einfluß eines solchen Katalysators zerfällt H₂O₂ in Wasser und Sauerstoff, ohne daß eine biozide oder biostatische Wirkung eintritt.

Wenn die Peroxoverbindungen in Form von Erdalkalisalzen vorliegen, wird der Aktivsauerstoff über einen längeren Zeitraum abgegeben (5 bis 10 Tage), als bei Verwendung von Peroxoverbindungen in der Alkaliform.

Die festen Peroxoverbindungen können mit den pulverförmigen anorganischen Sorbentien vermischt werden, bzw. sie können in die plastischen wasserhaltigen organischen Sorbentien eingearbeitet werden. Diese können bis zu etwa 60 bis 70 Gew.% Wasser enthalten, worauf nach dem Einarbeiten der festen Peroxoverbindungen eine Extrusion und anschließend eine Trocknung erfolgt. Auch wenn die beschriebenen Gemische einen hohen Feuchtigkeitsgehalt haben, werden die festen Peroxoverbindungen bis zur Trocknung praktisch nicht zersetzt. So werden bei einer Dauer der "feuchten" Phase von 1 bis 2 Stunden nur etwa 5% der Peroxoverbindungen zersetzt. Erst wenn die Tierstreu mit Urin in Kontakt kommt, findet eine Zersetzung der Peroxoverbindungen über einen Zeitraum von 2 bis 20 Tagen statt.

Es wurde überraschenderweise gefunden, daß der beschriebene Reaktionsmechanismus auch abläuft, wenn die Peroxoverbindung von Katzenurin gelöst wird und das anorganische Sorbens als Katalysator für die H₂O₂-Spaltung in gewünschter Weise zu fungieren in der Lage ist.

Diese Spaltung wird begünstigt, wenn das anorganische Sorbens Spuren von Schwermetallen, wie Fe²⁺, Mn³⁺, Cu²⁺ enthält, die aus den festen Peroxoverbindungen bei Zutritt von Flüssigkeit über Wasserstoffperoxid als Zwischenstufe Sauerstoff- und/öder Hydroxylradikale freisetzen.

Die erfindungsgemäße Tierstreu liegt vorzugsweise in Granulatform vor, wobei das Thymol auf der Oberfläche der Granulate und die Peroxoverbindungen (soweit enthalten) in den Granulaten verteilt sind.

Das Thymol kann aber auch in die Granulate eingearbeitet werden, wodurch der Langzeiteffekt verbessert werden kann. Vorzugsweise wird das Thymol aber kurz vor dem Einfüllen der Tierstreu in Säcke auf die Tierstreu aufgesprüht.

Das Thymol liegt vorzugsweise in einer Menge von etwa 50 bis 5000 ppm und die feste(n) Peroxoverbindung(en) vorzugsweise in einer Menge von 0,5 bis 5 Gew.% in der Tierstreu vor.

Gegenstand der Erfindung ist ferner ein Verfahren zur Herstellung der vorstehend definierten Tierstreu; das Verfahren ist dadurch gekennzeichnet, daß man ein anorganisches Sorbens in Form von feinen Teilchen oder in Form einer feuchten Masse oder ein Gemisch davon granuliert, wobei man diesem vor der Granulation die feste (n) Peroxoverbindung(en), soweit enthalten, zusetzt und das Thymol auf der Oberfläche der trockenen Granulate aufbringt. Hierbei wird die äußere Granulatoberfläche vorzugsweise mit einer alkoholischen Lösung des Thymols oder mit einem Thymianextrakt besprüht.

Die Erfindung ist durch die nachstehenden Beispiele erläutert:

### Beispiel 1

Es wurden jeweils 5kg
a) Ca-Bentonit mit einer spezifischen Oberfläche von 63 m²/g (bestimmt nach BET, DIN 66132) und einem Feuchtigkeitsgehalt von 8,5 Gew.%, bzw.
b) Palygorskit mit einer spezifischen Oberfläche von 138 m²/g und einem Feuchtigkeitsgehalt von 6,5 Gew.%

in Form von Granulaten mit einer Korngröße von 2 bis 5mm mit einer 20-gew.-%igen methanolischen Thymollösung besprüht, so daß der Thymolgehalt auf der Oberfläche des Granulats etwa 1000 ppm betrug. Nach dem Abdampfen des Methanols wurden jeweils 2g der Granulate (a) und (b) pulverisiert, zu 100 ml einer Bakterienlösung, enthaltend etwa 5,7 x 10⁵ Escherichia-coli-Keime/ml, gegeben und bei Raumtemparatur gerührt. Nach einer Einwirkungszeit von 24 Stunden wurde der durch Zentrifugieren erhaltene Überstand auf ein Nährmedium (Agar) aufgestrichen und die Zahl der verbliebenen Keime bestimmt. Es wurde eine Reduktion der Keimzahl um 90% (a) bzw. um 82% (b) gegenüber der Bakterien- lösung festgestellt.

Zum Vergleich wurde die Bakterienlösung mit der entsprechenden Menge Thymol in Reinform (2mg/100ml=20 ppm) versetzt. Nach 24 Stunden wurde die Keimzahl bestimmt, wobei eine Reduktion von 70% festgestellt wurde.

Mit den Restmengen (4,9 kg) der mit Thymol besprühten Sorbentien (a) und (b) wurden Praxistests durchgeführt. Dazu wurde die Streu in übliche Katzentoiletten gefüllt, die über 48 Stunden von je zwei Katzen benutzt wurden. Nach dieser Zeit wurde die Gesamt-Keimbelastung an einer repräsentativen Probe der Streu wie oben im Vergleich mit derselben Menge an unbehandelter, von den Katzen benutzter Streu bestimmt. Es ergab sich eine Reduktion der Keimzahl um 64% (a) bzw. 58% (b).

### Beispiel 2

20 kg einer natürlichen Mischung aus etwa 40 Gew.% Bentonit und 60 Gew.% Palygorskit (Hormit; Fundstätte, Meigs, Georgia/USA) und einem eingestellten Feuchtigkeitsgehalt von 30 Gew.% wurden wie nach Beispiel 2 mit 22g Calciumperoxid verknetet. Die zähe Masse wurde bis auf eine Feuchtigkeitsgehalt von 7 Gew.% getrocknet und gebrochen. Die Kornfraktion von 1,5 bis 5 mm wurde mit einer 20%-igen methanolischen Thymollösung besprüht, so daß sich in den Granulaten 400 ppm Aktivsauerstoff und auf der Oberfläche des Granulats 500 ppm Thymol befanden.

2g der Granulate wurden wie nach Beispiel 1 pulverisiert und zu einer E.-coli-Bakterienlösung gegeben. Nach 24 Stunden wurde eine Reduktion der Keimzahl um 65% festgestellt.

4,9 kg des Granulats wurden wie nach Beispiel 1 in einer Katzentoilette getestet, wobei gegenüber einem unbehandelten Granulat eine Reduktion der Gesamt-Keimzahl von 45% festgestellt wurde.

### Beispiel 3

5 kg eines Calciumsilicat-Granulats mit einer Korngröße von 2 bis 5 mm wurden mit 30 ml eines handelsüblichen, mit Ethanol (1:1) verdünnten Thymianöls besprüht. Nach dem Abdampfen des Ethanols wurden die Granulate wie nach Beispiel 1 pulverisiert und in eine E.-coli-Bakterienlösung gegeben. Nach 24 Stunden wurde eine Reduktion der Keimzahl um 78% festgestellt.

Die Hauptmenge des Granulats wurde wie nach Beispiel 1 in einer Katzentoillette getestet, wobei gegenüber dem unbehandelten, von den Katzen benutzten Granulat eine Reduktion der Gesamt-Keimzahl um 49% festgestellt wurde.

## Patentansprüche

1. Tierstreu, insbesondere Katzenstreu, auf der Basis von anorganischen Sorbentien und deren Gemischen, enthaltend Thymol als umweltverträgliches biostatisches bzw. biozides Mittel.

2. Tierstreu nach Anspruch 1, **dadurch gekennzeichnet, daß** die anorganischen Sorbentien silicatische Sorbentien, wie Calciumsilicat, Tonmineralien, wie Bentonit, und/oder Palygorskit, darstellen.

3. Tierstreu nach Anspruch 1 oder 2, **dadurch gekennzeichnet, daß** sie zusätzlich mindestens ein organisches Sorbens enthält.

4. Tierstreu nach einem der Ansprüche 1 bis 3, **dadurch gekennzeichnet, daß** sie in Granulatform vorliegt und das Thymol auf der Oberfläche der Granulate verteilt ist.

5. Tierstreu nach einem der Ansprüche 1 bis 4, **dadurch gekennzeichnet, daß** sie das Thymol in einer Menge von etwa 50 bis 5000 ppm enthält.

6. Tierstreu nach einem der Ansprüche 1 bis 5, **dadurch gekennzeichnet, daß** sie zusätzlich eine feste Peroxoverbindung, insbesondere Magnesium und/oder Calciumperoxid enthält, vorzugsweise in einer Menge von etwa 0,05 bis 5 Gew.-%.

7. Tierstreu nach Anspruch 6, **dadurch gekennzeichnet, daß** die anorganischen Sorbentien Spuren von Schwermetallen, wie Fe²⁺, Mn³⁺ oder Cu²⁺ enthalten, die aus den festen Peroxoverbindungen bei Zutritt von Flüssigkeit über Wasserstoffperoxid als Zwischenstufe Sauerstoff- und/oder Hydroxylradikale freisetzen.

8. Verfahren zur Herstellung einer Tierstreu nach einem der Ansprüche 1 bis 7, **dadurch gekennzeichnet, daß** man ein anorganisches Sorbens in Form von feinen Teilchen oder in Form einer feuchten Masse oder ein Gemisch davon granuliert, wobei man das Thymol auf die Oberfläche der Granulate aufbringt und gegebenenfalls die zusätzliche(n) feste(n) Peroxoverbindung(en) zusetzt.

## Claims

1. Animal litter, particularly for cats, on the basis of inorganic sorbents and mixtures thereof, containing thymol as an ecologically compatible biostatic or biocidal agent.

2. Animal litter according to claim 1, **characterised in that** the inorganic sorbents are silicate based (silicatic) sorbents, like calcium silicate, clay minerals such as bentonite and/or palygorskit.

3. Animal litter according to claim 1 or 2, **characterised in that** it additionally contains at least one organic sorbent.

4. Animal litter according to any one of claims 1 to 3, **characterised in that** it is present in granular form and that the thymol is distributed on the surface of the granules.

5. Animal litter according to any one of claims 1 to 4, **characterised in that** thymol is contained in an amount of about 50 to 5000 ppm.

6. Animal litter according to any one of claims 1 to 5, **characterised in that** it additionally contains a solid peroxo compound, in particular magnesium and/or calcium peroxide, preferably in an amount of about 0,05 to 5 % by weight.

7. Animal litter according to claim 6, **characterised in that** the inorganic sorbents contain traces of heavy metals, like Fe²⁺, Mn³⁺ or Cu²⁺ which release as intermediates oxygen and/or hydroxyl radicals via hydrogen peroxide from the solid peroxo compounds after addition of liquid.

8. Method for production of a animal litter according to any one of claims 1 to 7, **characterised in that** an inorganic sorbent in the form of fine particles or in form of a moist composition or mixture thereof is granulated and the thymol is applied on the surface of the granules and optionally the additional solid peroxo compound(s) is (are) added.

## Revendications

1. Litière pour animaux, en particulier litière pour chats, à base d'absorbants inorganiques et leurs mélanges, contenant du thymol comme agent biostatique ou biocide non polluant.

2. Litière pour animaux selon la revendication 1, **caractérisée en ce que** les absorbants inorganiques sont des absorbants silicatés, tels que le silicate de calcium, des minéraux argileux, tels que la bentonite et/ou la palygorskite.

3. Litière pour animaux selon la revendication 1 ou 2, **caractérisée en ce qu'**elle contient en outre au moins un absorbant organique.

4. Litière pour animaux selon l'une quelconque des revendications 1 à 3, **caractérisée en ce qu'**elle se trouve sous forme de granulat et le thymol est réparti sur la surface du granulat.

5. Litière pour animaux selon l'une quelconque des revendications 1 à 4, **caractérisée en ce qu'**elle contient le thymol en une quantité d'environ 50 à 5000 ppm.

6. Litière pour animaux selon l'une quelconque des revendications 1 à 5, **caractérisée en ce qu'**elle contient en outre un composé peroxo solide, en particulier du magnésium et/ou du peroxyde de calcium, de préférence en une quantité d'environ 0,05 à 5% en poids.

7. Litière pour animaux selon la revendication 6, **caractérisée en ce que** les absorbants inorganiques contiennent des traces de métaux lourds, tels que de Fe²⁺, Mn³⁺ ou Cu²⁺ qui libèrent des radicaux d'oxygène et/ou hydroxyle à partir des composés peroxo solides, lors de l'arrivée de liquide, via du peroxyde d'hydrogène comme étape intermédiaire.

8. Procédé de fabrication d'une litière pour animaux selon l'une quelconque des revendications 1 à 7, **caractérisé en ce qu'**on granule un absorbant inorganique sous forme de fines particules ou sous forme d'une masse humide ou sous forme d'un mélange de ceux-ci, le thymol étant appliqué à la surface du granulat et le ou les composés peroxo solides supplémentaires étant le cas échéant ajoutés.
